# EUROPÄISCHE PATENTSCHRIFT

(11) **EP 3 327 359 B1**
(45) Veröffentlichungstag und Bekanntmachung des Hinweises auf die Patenterteilung: **17.02.2021**
(21) Anmeldenummer: 17203587.5
(22) Anmeldetag: 24.11.2017
(51) Int. Cl.: F24D 3/14, F24D 3/16, F28F 21/06, F28D 1/047, H05B 3/14, H05B 3/34, B60N 2/58, F28D 1/04, F28D 1/053, B60N 2/56

(54) **FLÄCHENHEIZGEWEBE MIT HYDRAULISCHEN HEIZROHREN UND SEITENLICHTFASERN**
AREA HEATING TISSUE WITH HYDRAULIC HEAT PIPES AND SIDE LIGHT FIBRES
TISSU CHAUFFANT POUR SURFACES POURVU DE TUYAUX DE CHAUFFAGE HYDRAULIQUES ET DE FIBRES OPTIQUES LATÉRALES

(30) Priorität: 24.11.2016 DE 102016223335
(43) Veröffentlichungstag der Anmeldung: 30.05.2018
(73) Patentinhaber: Viessmann Climate Solutions SE, 35108 Allendorf (Eder) (DE)
(72) Erfinder: WENZEL, Bernd, 35444 Biebertal (DE)
(74) Vertreter: MERH-IP Matias Erny Reichl Hoffmann Patentanwälte PartG mbB

(56) Entgegenhaltungen:
- WO-A1-2015/068181
- DE-A1-102011 001 915
- FR-A1- 2 507 758
- US-A1- 2011 269 358

## Beschreibung

Die vorliegende Erfindung betrifft ein Flächenheizgewebe und ein Flächenheizmodul zum Heizen und/oder Kühlen von Räumen.

Aus der deutschen Patentanmeldung DE 102015225815 A1 ist ein modular aufgebautes Wandflächensystem zum Heizen und/oder Kühlen sowie Belüften und Beleuchten eines Raumes bekannt. Das Wandflächensystem wird aus einzelnen Modulen zum Beispiel über einer Wand oder am Boden als im Wesentlichen eine parallel zur Wand oder zum Boden zusammenhängende Fläche aufgebaut. Durch Streuzentren auf der Oberfläche kann seitlich eingestrahltes Licht in den Raum gestreut werden. Die Module sind jedoch nicht formflexibel.

Ein Gewebe mit einer Vielzahl von Lichtwellenleitern wird in der US-Patentanmeldung US 2011/0269358 A1 beschrieben. Als Lichtwellenleiter weist das Gewebe unter anderem Lichtemitterfasern auf, die seitlich geritzt sind, um Licht zu emittieren. Um eine homogenere Beleuchtung zu erreichen, können spezielle erste und zweite lichtreflektierende Fasern in das Gewebe eingewoben sein. Die lichtreflektierenden Fasern weisen einen polygonalen Querschnitt auf. Das Gewebe kann als Dekoration oder für leuchtende Kleidung verwendet werden. Zusätzlich können auch elektrische Heizdrähte in das Gewebe eingewoben sein.

Die deutsche Patentanmeldung DE 102011001915 A1 offenbart ein gattungsgemäßes Wärmetauscherelement, das aus einem flächenhaften Träger und einer Vielzahl von Kapillarrohren, die mit dem Träger verbunden sind, besteht. Die Kapillarrohre sind an den Enden einer Seite mit einer medienführenden Sammelleitung verbunden. Ein solches Wärmetauscherelement kann für Fußboden- und Wandheizungen verwendet werden, indem das Wärmetauscherelement unterflurig in der Wand oder im Boden verbaut wird.

Die internationale Patentanmeldung WO 2015/068181 A1 offenbart ein mehrschichtiges textiles Heizgewebe. Das Heizgewebe umfasst eine textile Heizschicht, die mit einem elektrischen Widerstand verbunden ist, der durch einen elektrischen Strom Wärme erzeugt, und mindestens eine angrenzend an die Heizschicht angeordnete reflektierende Schicht, die die von der Heizschicht erzeugte Wärme nach vorne abstrahlt.

Die französische Patentanmeldung FR 2507758 A1 beschreibt einen flächigen Heizkörper, der aus einer Vielzahl flexibler Kunststoffrohre mit kleinem Durchmesser besteht, die zu einer Matte zusammengefügt und in gegenseitigen Abständen angeordnet sind. Die Kunststoffrohre sind an mindestens einem Ende zu Verbindern für Rohrstücke zusammengefasst, die den Vor- und Rücklauf des Heißwassers bilden und die Rohrenden in paralleler Anordnung aufnehmen und gleichzeitig abdichten. Die Matte ist durch Halteelemente verstärkt, die die Rohrabstände fixieren und an ihrem Umfang und quer, vorzugsweise unter einem Winkel, zu den Rohren angeordnet sind und eine flexible netzartige Einheit bilden, die frei in den Bodenbelag eines Bodens einlegbar ist oder in den Putz einer Wand eingebettet werden kann.

Unterflurige, also fest im Boden oder in der Wand verbaute Flächenheizsysteme, sind bei Neubauten weit verbreitet und können insbesondere als Niedertemperaturheizungen, die gut mit regenerativen Heizsystemen, wie zum Beispiel Wärmepumpe, Brennstoffzelle oder Solarthermie harmonieren, eingesetzt werden. Demgegenüber scheitert der nachträgliche Einbau von Flächenheizungen in Altbauten meist an den dafür notwendigen Umbaumaßnahmen und verbundenen Kosten. Es müssen für die derzeit marktgeläufigen Systeme zunächst die bestehenden Boden- oder Wandbeläge aufgerissen werden. Dann muss ein neues unterfluriges hydraulisches Heizsystem verlegt werden. Anschließend müssen darüber neue Boden- oder Wandbeläge verlegt werden. Das ist teuer und verursacht zudem viel Schmutz beim Umbau. Außerdem sollen alte Holzdielen in Altbauten meist erhalten bleiben. Ferner sind alte Gebäude mit Holzbalkendeckenkonstruktionen statisch oft nicht geeignet für das zusätzliche flächenspezifische Gewicht von unterflurigen Flächenheizungen. Ein anderes Problem ist, dass im Zuge von Altbausanierungen oft der Wunsch besteht, die alten Fenster durch moderne bodentiefe Fenster zu ersetzen. Dazu müssen die alten Heizkörper, die meist unter den Fenstern sitzen, entfernt werden. Dann mangelt es oft an Platz im Raum, um neue Heizkörper neben den Fenstern zu installieren.

Die vorliegende Erfindung stellt sich die Aufgabe, ein formflexibles Flächenheizgewebe bereitzustellen, das überflurig eingesetzt werden kann, und mit dem Räume und/oder Möbel beheizt und/oder gekühlt werden können. Gelöst wird die Aufgabe durch ein Flächenheizgewebe gemäß Anspruch 1.

Das vorgestellte System bietet die Lösung der oben genannten Probleme bei der Bestandssanierung. Mit dem erfindungsgemäßen Flächenheizgewebe können Bestandsgebäude nachträglich auf bodentiefe Fenster und Flächenheizung umgestellt werden. Ferner ist das erfindungsgemäße Flächenheizgewebe auch gut für den Einsatz mit modernen, energiesparenden Niedertemperaturheizsysteme, wie die elektrische Wärmepumpe und Solarthermieanlagen, geeignet.

Ein Flächenheizgewebe ist ein im Wesentlichen zweidimensionales, flächig ausgedehntes, flexibles Gewebe. Es können aber auch dreidimensional geformte Flächenheizgewebe realisiert werden, insbesondere wenn das Flächenheizgewebe als Überzug von Sitzmöbeln Verwendung finden soll. Die geometrische Orientierung der in dem Gewebe enthaltenen Fasern kann in unterschiedlicher, zweckmäßiger Weise gemäß bekannter Webmuster und Fertigungstechniken ausgeführt sein. Die Orientierung der Gewebefasern beeinflusst die Flexibilität, so dass das Flächenheizgewebe in verschiedenen Richtungen eine unterschiedlich hohe Flexibilität aufweisen kann. Das Flächenheizgewebe kann als begeh- und belastbare Heizfläche ausgeführt sein, zum Beispiel als Heizteppich oder als Bezug von Heizsitzmöbeln.

Erfindungsgemäß weist das Flächenheizgewebe eine Vielzahl flexibler Heizrohre für ein fluides Trägermedium auf. Das fluide Trägermedium, also ein Gas oder eine Flüssigkeit wie beispielweise Wasser oder Wasserdampf, wird für den Wärmetransport verwendet. Das Flächenheizgewebe ist insbesondere zur Verwendung mit einem gebäudeseitig installierten hydraulischen zentralen Heizungs- oder Kühlsystem vorgesehen. Da sich das Flächenheizgewebe sehr gut als Niedertemperaturheizkörper eignet, kann es insbesondere im Zusammenspiel mit Wärmepumpen oder Solarkollektoren verwendet werden.

Die Heizrohre weisen vorzugsweise einen Durchmesser von weniger als 10 mm, zum Beispiel 3 mm bis 5 mm auf. Der Durchmesser soll aber vorzugsweise so groß sein, dass Kapillarkräfte noch vernachlässigbar gering sind. Somit lässt sich ein dünnes und flexibles Flächenheizgewebe realisieren, das einfach überflurig auf vorhandenen Boden- und/oder Wandbelägen verlegt werden kann. Durch die kleinkalibrigen Heizrohre hat es zudem ein geringes flächenspezifisches Gewicht. Als Material können Kunststoffe, beispielsweise PE, PE-RC oder PE-Xa verwendet werden.

Zur Versorgung der Heizrohre des Flächenheizgewebes mit Trägermedium weist das Flächenheizgewebe mindestens eine Vorlaufleitung auf, die mit der Vielzahl flexibler Heizrohre strömungsverbunden ist. Die Vorlaufleitung des Flächenheizgewebes kann beispielsweise mit dem Vorlauf einer gebäudeseitigen Zentralheizung verbunden werden.

Zum Abfließen des Trägermediums aus den Heizrohren weist das Flächenheizgewebe mindestens eine Rücklaufleitung auf, die mit der Vielzahl flexibler Heizrohre strömungsverbunden ist. Die Rücklaufleitung des Flächenheizgewebes kann beispielsweise mit dem Rücklauf einer gebäudeseitigen Zentralheizung verbunden werden, so dass das Trägermedium nach Durchströmen der Heizrohre über die Rücklaufleitung in den Rücklauf der Zentralheizung abfließen kann. Die Vorlaufleitung und die Rücklaufleitung sind als Sammelleitungen ausgebildet, die mit der Vielzahl der Heizungsrohre strömungsverbunden sind.

Die hydraulische Verschaltung zwischen der mindestens einen Vorlaufleitung, der mindestens einen Rücklaufleitung und der Vielzahl von Heizrohren kann beispielsweise gemäß dem Harfenprinzip erfolgen. Das heißt es werden auf jeder Seite jeweils zwei Sammelrohre (Vorlaufleitung oder Rücklaufleitung) vorgesehen. Dazwischen werden viele parallel geschaltete kleinkalibrige Heizrohre angeordnet, so dass das Gebilde einer Harfe ähnelt. Durch eine solche Anordnung kann ein besonders flexibles Flächenheizgewebe realisiert werden.

Die Vorlaufleitung und die Rücklaufleitung weisen üblicherweise einen größeren Durchmesser als die Heizrohre auf, zum Beispiel 10 mm bis 20 mm. Der Übergang zwischen den Heizrohren und der Vorlaufleitung beziehungsweise der Rücklaufleitung kann stufenartig oder gleitend verlaufen.

Alternativ kann auch ein einziges mäandrierend im Gewebe verlegtes Heizrohr verwendet werden, das somit gleichzeitig als Vorlaufleitung und Rücklaufleitung funktioniert. Außerdem kann eine Vielzahl mäandrierender Heizrohre in das Gewebe eingebracht sein. Die Vielzahl mäandrierender Heizrohre ist mit mindestens einer Vorlaufleitung und mindestens einer Rücklaufleitung strömungsverbunden. Eine Anordnung mit mäandrierenden Heizrohren eignet sich insbesondere für flächige Anwendungen, zum Beispiel als Fußboden- oder Wandheizung, wo eine höhere Steifigkeit des Flächenheizgewebes vorteilhaft ist.

Das Flächenheizgewebe weist eine Vielzahl wärmeleitfähige Gewebefasern auf. Die wärmeleitfähigen Gewebefasern stehen in Wärmekontakt mit den Heizrohren und können somit Wärme von den Heizrohren ableiten und abstrahlen. Bei der Verwendung des Flächenheizgewebes als Kühlkörper können die wärmeleitfähigen Gewebefasern Wärme vom Raum aufnehmen und auf die Heizrohre und das die Heizrohre durchströmende Trägermedium übertragen. Die wärmeleitfähigen Gewebefasern sind miteinander verwoben oder verflochten und bilden eine Gewebematrix. Die Gewebematrix fungiert als tragendes Gerüst des Flächengewebes und gibt dem Flächengewebe mechanische Stabilität. In das Gewebe aus wärmeleitfähigen Gewebefasern sind die Heizrohre eingebracht, welche ebenfalls zur mechanischen Stabilität des Gewebes beitragen können, also Teil der Matrix sein können. Die wärmeleitfähigen Gewebefasern können auch als Bündel verarbeitet sein, was insbesondere bei sehr dünnen Gewebefasern vorteilhaft ist.

Die wärmeleitfähigen Gewebefasern verbessern den Wärmeübertrag und die Wärmeabstrahlung. Sie leiten Wärme von den in das Gewebe eingebrachten Heizrohren ab und verteilen sie möglichst gleichmäßig über das gesamte Flächenheizgewebe. Sie verbessern somit den Wärmeübertrag vom Trägermedium in den zu beheizenden Raum. Umgekehrt kann der Wärmeübertrag beim Kühlen des Raumes von der Raumluft auf das Trägermedium durch die wärmeleitfähigen Gewebefasern verbessert werden.

Als Material für die wärmeleitfähigen Gewebefasern eignen sich zum Beispiel Metall- und/oder Karbonfasern. Der Durchmesser der wärmeleitfähigen Gewebefasern kann beispielsweise zwischen 1 mm und 10 mm liegen. Es können aber auch deutlich dünnere Fasern von nur einigen hundert Mikrometern verwendet werden. Somit kann ein besonders dünnes und leichtes Flächenheizgewebe ausgebildet werden. Karbonfasern (Kohlenstofffasern) haben üblicherweise einen Durchmesser von nur wenigen Mikrometern, etwa 5 bis 9 Mikrometer. Für die industrielle Verarbeitung werden üblicherweise einige Tausend Fasern zu einem Multifilamentgarn (Roving) zusammengefasst, das wie ein textiles Garn weiterverarbeitet (Weben, Flechten) werden kann.

Durch das Einweben der Heizrohre in eine Gewebematrix aus wärmeleitfähigen Gewebefasern kann gegenüber bisherigen Flächenheizsystemen erheblich Gewicht eingespart werden. Außerdem kann die thermische Reaktionsgeschwindigkeit deutlich erhöht, also die zum Aufheizen beziehungsweise Abkühlen benötigte Zeit, deutlich verringert werden. Die wärmeleitfähigen Gewebefasern erlauben zudem eine leichte nachträgliche Veränderung durch den Anwender, wie zum Beispiel ein Aufrollen und Wegpacken des Flächenheizgewebes.

Die Heizrohre können durch das Metall- oder Karbonfasergewebe zum mechanischen Schutz und zur besseren Wärmeverteilung ummantelt sein. Mittels einer Hohlraumversiegelung können Zwischenräume zwischen den Heizrohren und der Gewebematrix geschlossen werden. Hierzu wird vorzugsweise ein wärmeleitfähiges, elastisches Material wie z.B. Silikon verwendet, das einen Füllstoff zum Erhöhen der Wärmeleitfähigkeit aufweisen kann. Die Gewebematrix kann in einer beliebigen gewünschten Farbe, zum Beispiel der Raumfarbe, gestrichen werden. Alternativ können die wärmeleitfähigen Gewebefasern vor der Verarbeitung eingefärbt sein.

Das Flächenheizgewebe kann eine Vielzahl elektrisch beheizbarer Karbonfasern umfassen, die in ein Gewebe aus wärmeleitfähigen Gewebefasern und einer Vielzahl von Lichtleitfasern eingebracht ist. Die elektrisch beheizbaren Karbonfasern können zusätzlich zu den Heizrohren in das Flächenheizgewebe eingebracht sein. Durch die Verwendung elektrisch beheizbarer Karbonfasern kann das Flächenheizgewebe in Räumen verwendet werden, die kein hydraulisches Heizungssystem, also ein Heizungssystem, welches ein fluides Trägermedium als Wärmemedium verwendet, aufweisen. Die elektrisch beheizbaren Karbonfasern können über einen elektrischen Anschluss mit Strom versorgt werden. Ein solches Flächenheizgewebe kann zum Beispiel auch in Fahrzeugen mit Niedervoltsteckdosen verwendet werden.

Das Flächenheizgewebe ist in eine elastische Füllmasse mit guter Wärmeleitfähigkeit eingegossen. Die elastische Füllmasse kann vorhandene Hohlräume zwischen den Gewebefasern, den Heizrohren und den Lichtleitfasern verschließen. So ist das Flächenheizgewebe besser vor Umwelteinflüssen geschützt und behält seine flexiblen Eigenschaften bei. Außerdem wird der Wärmeübertrag zwischen Heizrohren und Gewebe verbessert. Ein solcher Bodenbelag eignet sich beispielsweise als wasserbeständige Struktur für den Einsatz im Bad. Die elastische Füllmasse kann zudem die Wärmeleitfähigkeit verbessern. Als Füllmasse eignen sich zum Beispiel Silikone oder Gummi, wobei ein wärmeleitfähiges Füllmittel für eine verbesserte Wärmeleitfähigkeit beigemischt sein kann. Alternativ kann das Flächenheizgewebe auch als wärmeleitfähiger Kurzfaserteppich ausgeführt sein, indem zum Beispiel eine Vielzahl von Textilfasern in das Flächenheizgewebe eingewebt ist.

Zusätzlich zu der oben beschriebenen Füllmasse kann das Flächenheizgewebe auf einer oder auf beiden Hauptflächen mindestens eine dünne Folie oder eine sonstige Schutzschicht aufweisen. Auf der raumzugewandten Seite ist die Folie oder Schutzschicht vorzugsweise transparent. Die Folie oder Schutzschicht kann das Flächenheizgewebe vor Umwelteinflüssen schützen und dem Flächenheizgewebe eine verbesserte mechanische Stabilität verleihen. Außerdem kann die Folie zur dekorativen Gestaltung des Flächenheizgewebes beitragen.

Eine Vielzahl von Lichtleitfasern ist in das Flächenheizgewebe eingewebt. Die Lichtleitfasern dienen zum flächigen Beleuchten des Flächenheizgewebes. Somit kann das Flächenheizgewebe als flächiges Beleuchtungsmittel für Räume dienen. Alternativ kann die Beleuchtung einen Betriebszustand, zum Beispiel die Temperatur des Flächenheizgewebes anzeigen. Beim Heizbetrieb kann das Flächenheizgewebe zum Beispiel in Rot- oder Orangetönen farblich beleuchtet werden. Im Kühlbetrieb kann Licht in Blautönen zum Beleuchten des Flächenheizgewebes verwendet werden.

Die elastische Füllmasse ist vorzugsweise transparent oder durchscheinend, so dass das Licht aus den Lichtleitfasern austreten oder durchscheinen kann.

Die Lichtleitfasern sind durch Weben in das Flächenheizgewebe eingebracht. Die Lichtleitfasern können in nur einer Richtung oder auch in mehreren Orientierungen in das Flächenheizgewebe eingewebt sein. Ferner können mehrere unterschiedlich orientierte Lagen von Lichtleitfasern miteinander verwebt sein. Je mehr Lichtleitfasern, und insbesondere je mehr Lagen von Lichtleitfasern miteinander verwebt sind, desto mehr können sie zur mechanischen Stabilität des Flächenheizgewebes beitragen. Die Lichtleitfasern bilden somit einen Teil der Gewebematrix des Flächenheizgewebes. Die geometrische Orientierung der Lichtleitfasern kann anwendungsspezifisch gewählt werden, um zum Beispiel die Flexibilität des Flächenheizgewebes in verschiedenen Richtungen unterschiedlich hoch zu gestalten. Durch das Verweben der Lichtleitfasern in mehrere Lagen können zudem gewünschte Lichteffekte realisiert werden.

Als Lichtleitfasern können beispielweise polymere optische Fasern (POF) verwendet werden. Hierbei handelt es sich um Lichtwellenleiter aus Kunststoff, z.B. aus Polymethylmethacrylat (PMMA) oder Polycarbonat (PC). Insbesondere können die POF als Seitenlichtfasern ausgebildet sein. Bei Seitenlichtfasern wird eingekoppeltes Licht seitlich, also im Wesentlichen senkrecht zur Längsrichtung der Fasern, insbesondere homogen und über die gesamte Länge der Fasern abgegeben. Ein Flächenheizgewebe mit solchen Fasern kann daher besonders gleichmäßig beleuchtet werden, beziehungsweise zum gleichmäßigen Ausleuchten eines Raumes verwendet werden. POF haben zudem den Vorteil, dass sie sehr leicht und flexibel sind. Ferner können die Lichtleitfasern das Gewebe mechanisch stabilisieren und somit neben den wärmeleitfähigen Gewebefasern einen Teil der Gewebematrix bilden. Typische POF weisen einen Durchmesser von etwa 1 mm bis 10 mm auf.

Das erfindungsgemäße Flächenheizgewebe kann mindestens eine Lichtquelle aufweisen, die vorzugsweise in einem Randgebiet des Flächenheizgewebes angeordnet ist, so dass sie möglichst wenig Wärme von den Heizrohren abbekommt. Insbesondere sind LEDs als Lichtquelle geeignet. Da deren Lebensdauer durch Wärme eingeschränkt werden kann, ist eine von den Heizrohren entfernte Anordnung der LEDs für deren Lebensdauer vorteilhaft. Die mindestens eine Lichtquelle kann zum Beispiel an einem Rand des Flächenheizgewebes angeordnet sein. Durch die Verwendung der Lichtleitfasern kann die Lichtquelle thermisch von den Heizrohren entkoppelt werden. Somit kann eine durch die von den Heizrohren abgegebene Wärme verursachte Beeinträchtigung der Lebensdauer oder des Betriebs der Lichtquelle vermieden oder zumindest minimiert werden.

Die mindestens eine Lichtquelle ist mit den Lichtleitfasern gekoppelt, so dass die Lichtleitfasern einen möglichst großen Anteil des von der Lichtquelle emittierten Lichts übertragen. Vorzugsweise weist das Flächenheizgewebe eine Vielzahl von LEDs auf, die Licht in mehreren Farben, zum Beispiel rotes, grünes, blaues und/oder weißes Licht emittieren können. Vorzugsweise weist das Flächenheizgewebe für jede Lichtleitfaser eine eigene Lichtquelle auf, so dass die Lichtleitfasern unabhängig voneinander beleuchtet werden können.

Insbesondere mit LEDs kann eine beliebige einfarbige, mehrfarbige oder weiße Farbgebung oder ein Farbverlauf mit mehreren Farben erzielt werden. Das Flächenheizgewebe kann somit auch als Dekoration für Räume, zum Beispiel als Teppich auf dem Boden, an Möbeln, an der Wand oder der Decke, verwendet werden. Die Lichtleitfasern können jeweils entweder einseitig oder auch beidseitig mit einer Lichtquelle (z.B. RGBW-LED oder UV-LED) verbunden sein. Je mehr getrennte Lichtquellen angeschlossen sind, desto mehr Farbwechsel können zwischen einzelnen Lichtleitfasern oder auch Strängen von Lichtleitfasern erzielt werden. Prinzipiell kann auch eine funktional reduzierte Variante des Gewebes mit ausschließlicher Leuchtfunktion gefertigt werden.

Alternativ oder in Kombination mit LED kann auch natürliches Tageslicht als Lichtquelle in die Lichtleitfasern geleitet werden. Das Tageslicht kann über entsprechende Kollimatoren, zum Beispiel Sollektoren, auf der Gebäudeaußenseite gesammelt werden. Somit kann eine möglichst natürliche und energiesparende Beleuchtung von Räumen erreicht werden. Ein solches Flächenheizgewebe mit Lichtleitfasern, die Tageslicht abstrahlen ist besonders gut für den Einsatz in Büros geeignet und insbesondere für Räume ohne oder mit nur wenigen Festern.

Gemäß einer bevorzugten Ausführungsform kann das Flächenheizgewebe Textilfasern aufweisen. Somit kann es für den Einsatz als Heizauflage auf Sitzmöbeln, im Bett oder auch als Heizteppich besonders gut geeignet sein, da zum Beispiel die Oberfläche besonders weich und angenehm gestaltet werden kann. Ferner kann ein solches Flächenheizgewebe dreidimensional als angepasste Heizauflage für Möbel vorgeformt sein, so dass es beispielsweise besonders passgenau auf ein Sitzmöbel gelegt werden kann. Für den Einsatz als Heizteppich können die Textilfasern derart in das Gewebe eingebracht sein, dass das Flächenheizgewebe begehbar und gepolstert ist. Außerdem kann das Flächenheizgewebe mit Textilfasern als beheizbarer Polsterbezug für Sitzmöbel oder als Heizdecke zur Verwendung im Bett, zum Beispiel als Auflage für eine Matratze, ausgeführt sein.

Die erfindungsgemäße Aufgabe wird weiterhin gelöst durch ein Flächenheizmodul zum Heizen und/oder Kühlen von Räumen, das mindestens ein Flächenheizgewebe umfasst, das mit einem wärmeleitfähigen Material in eine Grundplatte eingegossen ist. Die Grundplatte selbst und/oder das wärmeleitfähige Material zum Eingießen kann zweckmäßigerweise ein geeigneter Gips, Putz, (Epoxid-) Harz oder Kunststoff sein. Es können aber auch beliebige andere geeignete wärmeleitfähige Materialien verwendet werden. Ein durch Eingießen mindestens eines Flächenheizgewebes in eine Grundplatte gefertigtes Flächenheizmodul kann in vorteilhafter Weise als vorgefertigtes und für den geplanten Einsatz angepasstes Bauteil bereitgestellt werden. Solche als vorgefertigte Heizplatten gefertigte Flächenheizmodule können beispielsweise an Wänden, auf dem Boden, an der Decke und/oder als Teil von Möbeln oder Möbelelementen montiert werden.

Eine weitere Lösung der erfindungsgemäßen Aufgabe gelingt durch ein Flächenheizmodul zum Heizen und/oder Kühlen von Räumen mit mindestens einem vorkonfektionierten Flächenheizgewebe, bei dem die Heizrohre, die mindestens eine Vorlaufleitung und die mindestens eine Rücklaufleitung vollständig mit einem fluiden Trägermedium befüllt und entlüftet sind. Somit ist das Flächenheizmodul bereits als Fertigbauteil für den Einsatz als Heizkörper (beziehungsweise Kühlkörper) vorbereitet und muss nur noch an eine entsprechende Versorgung, zum Beispiel ein gebäudeseitiges zentrales Heizungs- oder Kühlsystem, angeschlossen werden.

Zum Anschließen an ein zentrales Heizungs- oder Kühlsystem weisen die mindestens eine Vorlaufleitung und die mindestens eine Rücklaufleitung jeweils eine zum Anschließen bereite hydraulische Kupplung auf. Zum Anschließen bereit bedeutet, dass die Kupplung mit wenigen Handgriffen an einen entsprechenden Anschluss an einem zentralen Heizungs- oder Kühlsystem angeschlossen werden kann. Dies schließt nicht aus, dass zunächst eventuell vorhandene Deckel oder Verpackungselemente entfernt werden müssen.

Die Verbindung zum gebäudeseitigen Heizungs- oder Kühlsystem kann bei allen Flächenheizmodulen oder Flächenheizgeweben beispielsweise über lösbare hydraulische Steckkupplungen vorgenommen werden. Diese können zum Beispiel an eine oder mehrere Raumverteilerstation(en) mit integrierter hydraulischer Weiche angeschlossen werden. Über die Weiche ist eine hydraulische Entkopplung der Flächenheizgewebe-Einzelkreise vom zentralen Heizungs- oder Kühlkreis möglich. Ein hydraulischer Abgleich der Flächenheizgewebe-Einzelkreise kann jeweils über dezentrale Heizkreispumpen, zum Beispiel eine Umwälzpumpe, erfolgen. Mit einer vorzugsweise in die Steckkupplung integrierten elektrischen Verbindung kann zugleich auch die dezentrale Umwälzpumpe elektrisch angeschlossen werden.

Alternativ kann eine Raumverteilerstation auch vollständig hydraulisch getrennt vom zentralen Heiz- und/oder Kühlsystem aufgebaut sein. Die Trennung erfolgt zum Beispiel über einen in der Verteilerstation integrierten Wärmetauscher. Sie stellt sicher, dass kein Trägermedium aus dem Heiz- und/oder Kühlsystem in die kleinkalibrigen Heizrohre des Flächenheizgewebes gelangt. So kann zum Beispiel eine innere Verschmutzung der kleinkalibrigen Heizrohre durch verunreinigtes Trägermedium aus dem zentralen Heiz- und/oder Kühlsystem vermieden werden

Das Flächenheizmodul als Fertigbauteil kann in vorgegeben Standardgrößen ab Werk gefertigt werden. Solche Module können entweder flexible Flächenheizgewebe oder in einen Rahmen fest eingegossene Flächenheizgewebe aufweisen. Diese können in Räumen verlegt und per hydraulischer oder elektrischer Steckkupplung an die Verteilereinheit im Raum angeschlossen werden. Die Vorlauf- und Rücklaufleitungen des Flächenheizmoduls, beziehungsweise des Flächenheizgewebes, können im Raum jeweils überflurig, vorzugsweise hinter Sockelleisten, verlegt werden.

Ein bevorzugtes Flächenheizmodul beziehungsweise Flächenheizgewebe weist eine Umwälzpumpe zum Pumpen von Trägermedium aus dem zentralen Heizungs- oder Kühlsystem durch das Flächenheizmodul beziehungsweise Flächenheizgewebe auf. Durch die Umwälzpumpe kann eine automatisierbare hydraulische Anpassung des individuellen Heizkreises des Flächenheizmoduls beziehungsweise Flächenheizgewebes vorgenommen werden.

Ein Flächenheizmodul beziehungsweise Flächenheizgewebe kann für den Einsatz auf- oder integriert in Türen angepasst sein. Hierbei kann die hydraulische Verbindung zur Vorlaufleitung beziehungsweise Rücklaufleitung vom Türblatt zum Türrahmen über die Türangeln auf die Türbänder erfolgen. Die Angeln können dazu innen hohl sein und als Stecker fungieren, auf die mit Einhängen der Tür die beiden hydraulischen Kupplungen (in den beiden Türbändern) eingesteckt werden.

Das erfindungsgemäße Flächenheizgewebe eignet sich sowohl für die Massenproduktion "von der Rolle" als auch als fertig konfektionierte Einheit in Standardgrößen zum "Plug n Play" Einsatz. Es werden dazu maschinell die Heizrohre und polymeroptischen Lichtleitfasern mit der Gewebematrix ummantelt und abschließend die Hohlräume mit wärmeleitfähigem Material vergossen. Beim Einsatz von der Rolle muss die jeweilige Heizfläche manuell vom Anwender zugeschnitten, montiert und mit Heizwasser befüllt und entlüftet werden. Das erfindungsgemäße Flächenheizgewebe kann wie eine Tapete an einer Wand, einer Decke und/oder auf dem Boden flächig haftend angebracht werden oder, begehbar gepolstert, als Heizteppich über bestehende Bodenbeläge verlegt werden. Aufgrund der geringen Masse des Flächenheizgewebes bildet es eine thermisch schnell reagierende Übertragungsfläche.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: Fig. 1 zeigt eine perspektivische Ansicht eines Ausschnitts eines Ausführungsbeispiels eines erfindungsgemäßen Flächenheizgewebes.
- **Figur 2**: Fig. 2 zeigt eine Schnittansicht entlang einer Lichtleitfaser eines Ausschnitts eines Ausführungsbeispiels eines erfindungsgemäßen Flächenheizgewebes.
- **Figur 3**: Fig. 3 zeigt ein Ausführungsbeispiel eines erfindungsgemäßen Flächenheizgewebes, das an einen Heizungskreislauf angeschlossen ist.
- **Figur 4**: Fig. 4 zeigt ein Ausführungsbeispiel der Erfindung zum Beheizen einer Tür.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

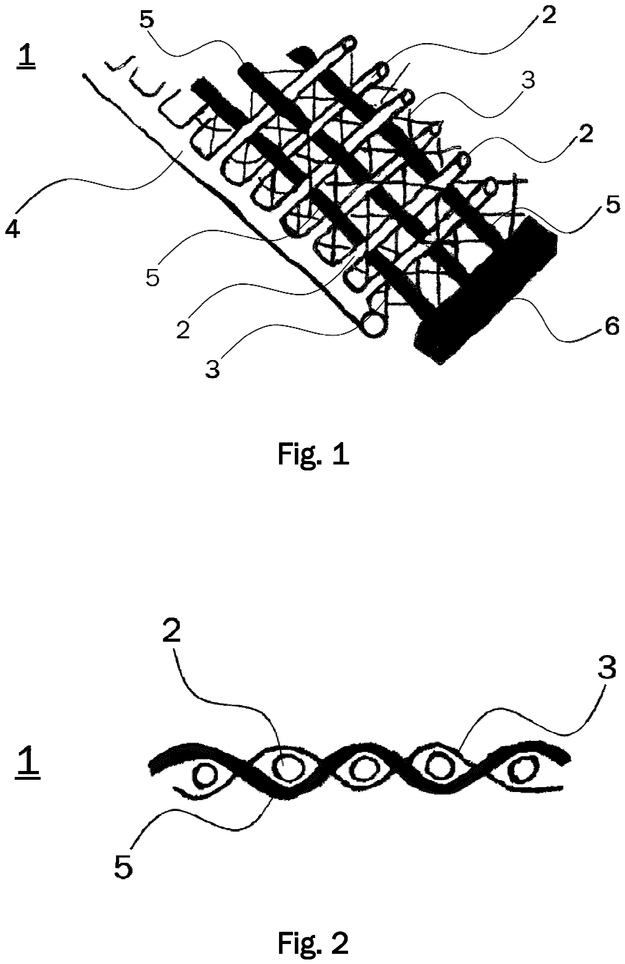

Fig. 1 illustriert ein Ausführungsbeispiel eines erfindungsgemäßen Flächenheizgewebes 1. Fig. 2 zeigt eine vereinfachte Schnittdarstellung des Flächenheizgewebes gemäß Fig. 1. In Fig. 1 ist ein Ausschnitt des Flächenheizgewebes 1 dargestellt. Das Flächenheizgewebe 1 ist ein im Wesentlichen zweidimensionales, flächig ausgedehntes, flexibles Gewebe. Die geometrische Orientierung der in dem Gewebe enthaltenen Fasern kann abweichend von der schematischen Darstellung in unterschiedlicher, zweckmäßiger Weise, gemäß bekannter Webmuster und Fertigungstechniken, ausgeführt sein. Die Orientierung der Gewebefasern beeinflusst die Flexibilität, so dass das Flächenheizgewebe 1 in verschiedenen Richtungen eine unterschiedlich hohe Flexibilität aufweisen kann. Das Flächenheizgewebe 1 kann auch als begeh- und belastbare Heizfläche ausgeführt sein, zum Beispiel als Heizteppich oder als Bezug von Heizsitzmöbeln.

Ausgehend von einer Vorlaufleitung 4 sind senkrecht zur Vorlaufleitung mehrere dünne, flexible Heizrohre 2 angeordnet, die über die Vorlaufleitung 4 mit einem fluiden Trägermedium versorgt werden können. Das fluide Trägermedium, also ein Gas oder eine Flüssigkeit, wie beispielweise Wasser oder Wasserdampf, wird für den Wärmetransport verwendet. Bei dem fluiden Trägermedium kann es sich beispielsweise um heißes Wasser aus einer Zentralheizung handeln.

Das Flächenheizgewebe 1 ist insbesondere zur Verwendung mit gebäudeseitig installierten hydraulischen Zentralheizungssystemen vorgesehen. Da sich das Flächenheizgewebe 1 aber auch sehr gut als Niedertemperaturheizkörper eignet, kann es zum Beispiel auch im Zusammenspiel mit Wärmepumpen oder Solarkollektoren verwendet werden.

Die Heizrohre 2 weisen einen Durchmesser von 10 mm oder weniger auf, zum Beispiel 3 mm bis 5 mm. Der Durchmesser ist so groß, dass Kapillarkräfte noch vernachlässigbar gering sind. Mit solch dünnen Heizrohren 2 ist das Flächenheizgewebe 1 dünn und flexibel und kann einfach überflurig auf vorhandenen Boden- und/oder Wandbelägen verlegt werden. Durch die kleinkalibrigen Heizrohre 2 hat es zudem ein geringes flächenspezifisches Gewicht. Als Material für die Heizrohre 2 können insbesondere Kunststoffe, beispielsweise PE, PE-RC oder PE-Xa verwendet werden.

Senkrecht zu den Heizrohren 2 sind mehrere Lichtleitfasern 5 angeordnet, die mit den Heizrohren 2 verwebt beziehungsweise verflochten sind. Bei dem Gewebe des dargestellten Ausführungsbeispiels verlaufen die Lichtleitfasern 5 abwechselnd über und unter den Heizrohren 2. Es können aber beliebige andere Flecht- beziehungsweise Gewebemuster realisiert werden, wobei das gewählte Flecht- beziehungsweise Gewebemuster unter anderem die richtungsabhängige Flexibilität des Flächenheizgewebes 1 beeinflusst.

Die Lichtleitfasern 5 dienen zur passiven Flächenbeleuchtung des Flächenheizgewebes 1. Somit kann das Flächenheizgewebe 1 als flächiges Beleuchtungsmittel für Räume dienen. Außerdem kann durch die Beleuchtung ein Betriebszustand, zum Beispiel die Temperatur des Flächenheizgewebes 1, angezeigt werden. Beim Heizbetrieb kann das Flächenheizgewebe 1 in Rot- oder Orangetönen farblich beleuchtet werden. Im Kühlbetrieb wird Licht in Blautönen zum Beleuchten des Flächenheizgewebes 1 verwendet.

Die Lichtleitfasern 5 des Ausführungsbeispiels sind polymere optische Fasern (POF). Die POF 5 sind zudem als Seitenlichtfasern ausgebildet, die eingekoppeltes Licht seitlich, also im Wesentlichen senkrecht zur Längsrichtung der Lichtleitfasern 5 und über die gesamte Länge der Lichtleitfasern 5 abgeben. Das Flächenheizgewebe 1 kann somit sehr gleichmäßig ausgeleuchtet werden. Die POF 5 haben den Vorteil, dass sie sehr leicht und flexibel sind. Ferner stabilisieren die Lichtleitfasern 5 das Flächenheizgewebe 1 mechanisch und bilden somit neben den wärmeleitfähigen Gewebefasern 3 einen Teil der Gewebematrix des Flächenheizgewebes 1. Die POF 1 weisen einen Durchmesser von ca. 1 mm auf.

An die Lichtleitfasern 5 ist beidseitigjeweils eine Lichtquelle 6 gekoppelt. Die Lichtquelle 6 umfasst eine Vielzahl von LEDs. Durch die Anordnung der Lichtquelle am Rand des Flächenheizgewebes 1 sind die LEDs weitestgehend vor der Wärmeeinwirkung der Heizrohre 2 entkoppelt und geschützt. Die LEDs in der Lichtquelle 6 sind so angeordnet, dass für jede Lichtleitfaser 5 mehrere LEDs mit unterschiedlichen Farben Licht in die Lichtleitfaser 5 einkoppeln, so dass die Lichtleitfasern 5 in verschiedenen Farben beleuchtet werden können, zum Beispiel rotes, grünes, blaues und/oder weißes Licht. Durch Mischen der drei Farben können weitere (Misch-) Farben erzeugt werden.

Alternativ oder in Kombination mit LEDs kann auch natürliches Tageslicht als Lichtquelle in die Lichtleitfasern geleitet werden, zum Beispiel über entsprechende Kollimatoren auf der Gebäudeaußenseite. Hierzu können beispielsweise sogenannte Sollektoren verwendet werden.

Die Heizrohre 2 und die Lichtleitfasern 5 sind in ein Gewebe aus wärmeleitenden Gewebefasern 3 eingebettet beziehungsweise eingewebt. Die wärmeleitenden Gewebefasern 3 leiten Wärme von den Heizrohren 2 ab und verteilen sie möglichst gleichmäßig über das gesamte Flächenheizgewebe 1, so dass ein verbesserter Wärmeübertrag auf den zu heizenden Raum stattfinden kann. Darüber hinaus bilden die wärmeleitenden Gewebefasern 3 eine Gewebematrix, welche die mechanische Stabilität des Flächenheizgewebes gewährleistet. Heizrohre 2 und Lichtleitfasern 5 können ebenfalls zur mechanischen Stabilität beitragen.

Die Darstellung der Fig. 1 zeigt ein sehr weitmaschiges Netz aus wärmeleitenden Gewebefasern 3, das nur zur besseren Darstellung der einzelnen Komponenten dient. Tatsächlich bilden die wärmeleitenden Gewebefasern 3 ein dichtes Gewebe, bei dem die Zwischenräume zwischen den einzelnen Gewebefasern 3, sowie zwischen Gewebefasern 3 und den Heizrohren 2, zur Optimierung der Wärmeleitung möglichst klein sind. Um den Wärmeübertrag zu verbessern, können die Zwischenräume, insbesondere zwischen den wärmeleitenden Gewebefasern 3 und den Heizrohren 2, mit einem wärmeleitfähigen Material, zum Beispiel einem wärmeleitfähigen Harz oder Silikon, verschlossen sein. Die wärmeleitenden Gewebefasern 3 des Ausführungsbeispiels bestehen aus Karbonfasern.

Durch das Einweben der Heizrohre 2 in die Gewebematrix aus wärmeleitfähigen Gewebefasern 3 kann die thermische Reaktionsgeschwindigkeit des Flächenheizgewebes 1 deutlich erhöht, also die zum Aufheizen beziehungsweise Abkühlen benötigte Zeit, deutlich verringert werden. Die wärmeleitfähigen Gewebefasern 3 erlauben zudem eine leichte Handhabung des Flächenheizgewebes 1 durch den Installateur beziehungsweise Endabnehmer, da sich das Flächenheizgewebe leicht Aus- und Aufrollen lässt.

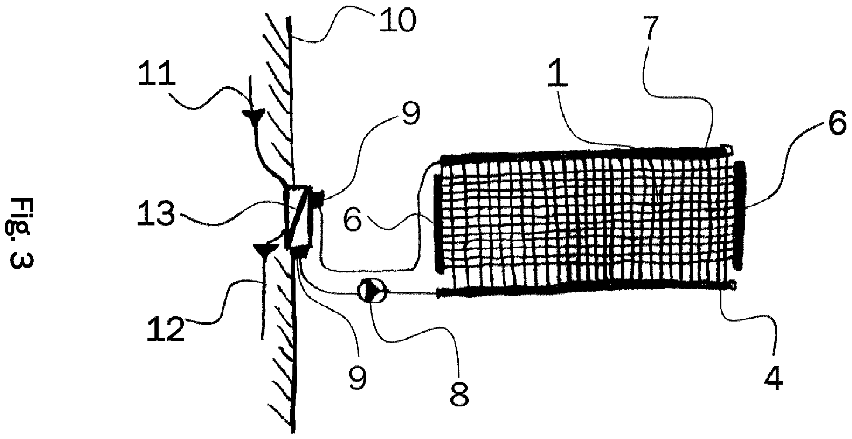

Fig. 3 zeigt ein Ausführungsbeispiel eines erfindungsgemäßen Flächenheizgewebes 1, dessen Vorlaufleitung 4 und Rücklaufleitung 7, die jeweils eine hydraulische Kupplung 9 aufweisen, über einen Trennwärmetauscher 13 mit einem Vorlauf 11 und einem Rücklauf 12 eines zentralen Heizkreises verbunden sind. Alternativ kann statt einem Trennwärmetauscher 13 auch eine hydraulische Weiche verwendet werden. Zur übersichtlicheren Darstellung sind die wärmeleitenden Gewebefasern 3 nicht eingezeichnet. Die Vorlaufleitung 4 und die Rücklaufleitung 7 des Flächenheizgewebes 1 sind als Sammelleitungen ausgeführt. Die Konfiguration der Heizrohre 2 zwischen Vorlaufleitung 4 und Rücklaufleitung 7 erfolgt gemäß dem Harfenprinzip, so dass die Heizrohre 2 parallel geschaltet sind.

Die Vorlaufleitung 4 und die Rücklaufleitung 7 weisen mit ca. 15 mm einen größeren Durchmesser als die Heizrohre 2 auf. Der Übergang zwischen den Heizrohren 2 und der Vorlaufleitung 4 beziehungsweise der Rücklaufleitung 7 erfolgt hier stufenartig.

Die Verbindung zum gebäudeseitigen Heizungs- oder Kühlsystem kann bei dem Flächenheizgewebe 1 der Fig. 1 über lösbare hydraulische Steckkupplungen 9 vorgenommen werden. Die dargestellte Raumverteilerstation weist eine integrierte hydraulische Weiche 13 auf. Über die hydraulische Weiche 13 wird eine hydraulische Entkopplung des Einzelkreises des Flächenheizgewebes 1 vom zentralen Heizkreis erreicht. Der hydraulische Abgleich des Flächenheizgewebe-Einzelkreises erfolgt über die Umwälzpumpe 8. In die Steckkupplung 9 ist zudem eine elektrischen Verbindung integriert, über welche zugleich auch die Umwälzpumpe 8 mit elektrischem Strom versorgt und gesteuert wird.

Das in den Figuren 1 bis 3 dargestellte Flächenheizgewebe 1 kann überflurig auf Wänden, Decken und Böden oder auch auf Möbeln oder als Teil von Möbeln verlegt werden. Mit dem Flächenheizgewebe 1 können Räume und/oder Möbel beheizt und/oder gekühlt werden. Das gezeigte Flächenheizgewebe 1 ist insbesondere auch für den Einsatz mit modernen, energiesparenden Niedertemperaturheizsystemen, wie zum Beispiel einer elektrischen Wärmepumpe oder einer Solarthermieanlage, geeignet.

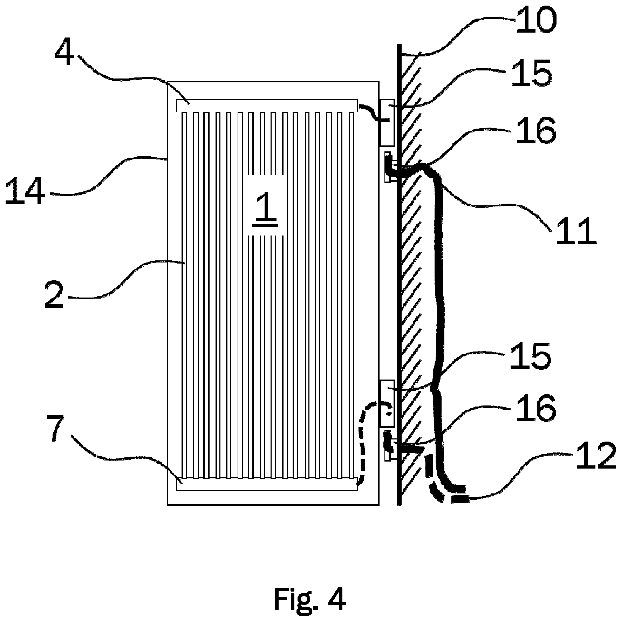

Fig. 4 zeigt eine Ausführungsform der Erfindung bei der ein Flächenheizgewebe 1 in einer Tür 14 eingebaut ist, so dass die Tür 14 selbst als Flächenheizmodul funktioniert. Die hydraulische Verbindung von der Vorlaufleitung 4 beziehungsweise Rücklaufleitung 7 des Flächenheizgewebes 1 zum Vorlauf 11 beziehungsweise Rücklauf 12 des zentralen Heizungssystems erfolgt über die Türbänder 15 und Türangeln 16. Der Vorlauf 11 und der Rücklauf 12 des zentralen Heizungssystems verlaufen durch die Wand 10 bis zu den Türangeln 16. Die Türangeln 16 sind innen hohl und fungieren als Stecker, auf die mit Einhängen der Tür 14 hydraulische Kupplungen 9 in den beiden Türbändern 15 eingesteckt werden. Auf diese Weise kann ein Heizkörper auf besonders platzsparende Weise in einem Raum angeordnet werden.

Das als Tür 14 ausgeführte Flächenheizmodul zum Heizen und/oder Kühlen eines Raumes ist mit einem wärmeleitfähigen Material in das Türblatt als Grundplatte eingegossen. Das Türblatt 14 ist aus einem gut wärmeleitfähigen Metall, wie zum Beispiel Aluminium gefertigt. Das Flächenheizgewebe 1 ist in das Türblatt eingegossen, zum Beispiel mit einem wärmeleitfähigen Epoxid-Harz.

Bei dem als Tür 14 ausgebildeten Flächenheizmodul sind die Heizrohre 2, die Vorlaufleitung 4 und die Rücklaufleitung 7 bereits vor der Auslieferung vollständig mit Wasser als Wärme-Trägermedium befüllt und entlüftet. Somit ist das Tür-Flächenheizmodul bereits als Fertigbauteil für den Einsatz als Heizkörper vorbereitet und muss nur noch in einem entsprechend vorbereiteten Türrahmen eingesetzt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Flächenheizgewebe
- 2: Heizrohr
- 3: wärmeleitfähige Gewebefasern
- 4: Vorlaufleitung
- 5: Lichtleitfasern
- 6: Lichtquelle (LEDs)
- 7: Rücklaufleitung
- 8: Umwälzpumpe
- 9: Hydraulische Kupplung
- 10: Wand
- 11: Vorlauf der Zentralheizung
- 12: Rücklauf der Zentralheizung
- 13: Hydraulische Systemtrennung, Trennwärmetauscher
- 14: Tür
- 15: Türband
- 16: Türangel

## Patentansprüche

1. Flächenheizgewebe (1) zum Heizen und/oder Kühlen von Räumen, umfassend:
eine Vielzahl flexibler Heizrohre (2) für ein fluides Trägermedium, die in ein Gewebe aus wärmeleitfähigen Gewebefasern (3), die in Wärmekontakt mit den Heizrohren (2) stehen, eingewebt ist;
mindestens eine Vorlaufleitung (4) zum Versorgen der Heizrohre (2) mit Trägermedium; und
mindestens eine Rücklaufleitung (7) zum Abfließen des Trägermediums,
**dadurch gekennzeichnet, dass**
eine Vielzahl von Lichtleitfasern (5) in das Flächenheizgewebe (1) eingewebt ist, und
das Flächenheizgewebe (1) in eine elastische Füllmasse mit guter Wärmeleitfähigkeit eingegossen ist.

2. Flächenheizgewebe (1) nach Anspruch 1 wobei das Flächenheizgewebe (1) ferner umfasst:
mindestens eine Lichtquelle (6), die mit den Lichtleitfasern (5) gekoppelt ist.

3. Flächenheizgewebe (1) nach Anspruch 1 oder 2, wobei die Lichtleitfasern (5) polymeroptische Seitenlichtfasern sind.

4. Flächenheizgewebe (1) nach mindestens einem der vorhergehenden Ansprüche, wobei die wärmeleitfähigen Gewebefasern (3) Metalldrähte oder/oder Karbonfasern sind.

5. Flächenheizgewebe (1) nach mindestens einem der vorhergehenden Ansprüche, wobei das Flächenheizgewebe (1) ferner Textilfasern aufweist und dreidimensional als angepasste Heizauflage für Möbel vorgeformt ist.

6. Flächenheizmodul zum Heizen und/oder Kühlen von Räumen, umfassend:
mindestens ein Flächenheizgewebe (1) nach mindestens einem der vorhergehenden Ansprüche,
wobei das Flächenheizgewebe (1) mit einem wärmeleitfähigen Material in eine Grundplatte eingegossen ist.

7. Flexibles Flächenheizmodul zum Heizen und/oder Kühlen von Räumen, umfassend:
mindestens ein Flächenheizgewebe (1) nach mindestens einem der Ansprüche 1 bis 6, wobei:
die Heizrohre (2), die mindestens eine Vorlaufleitung (4) und die mindestens eine Rücklaufleitung (7) des mindestens einen Flächenheizgewebes (1) vollständig mit einem fluiden Trägermedium befüllt und entlüftet sind; und
die mindestens eine Vorlaufleitung (4) und die mindestens eine Rücklaufleitung (7) des mindestens einen Flächenheizgewebes (1) jeweils eine zum Anschließen an ein zentrales Heizungs- oder Kühlsystem (12, 13) bereite hydraulische Kupplung (9) aufweisen.

8. Flächenheizmodul nach Anspruch 6 oder 7, ferner umfassend:
eine Umwälzpumpe (8) zum Pumpen von Trägermedium aus dem zentralen Heizungs- oder Kühlsystem (12, 13) durch das Flächenheizmodul.

## Claims

1. A panel heating fabric (1) for heating and/or cooling of rooms, comprising:
a variety of flexible heating pipes (2) for a fluid carrier medium, woven in a fabric of thermally conductive fabric fibers (3) being in thermal contact with said heating pipes (2);
at least one flow pipe (4) for supplying said heating pipes (2) with a carrier medium; and
at least one return pipe (7) for draining said carrier medium,
**characterized in that**
a variety of optical fibers (5) is woven in said panel heating fabric (1) and
said panel heating fabric (1) is molded in an elastic filler with good thermal conductivity.

2. The panel heating fabric (1) of claim 1, said panel heating fabric (1) further comprising:
at least one light source (6) coupled with said optical fibers (5).

3. The panel heating fabric (1) of claims 1 or 2, wherein said optical fibers (5) are polymeric optical side light fibers.

4. The panel heating fabric (1) of at least one of the previous claims, wherein said heat conducting fabric fibers (3) are metal wires and/or carbon fibers.

5. The panel heating fabric (1) of at least one of the previous claims, wherein said panel heating fabric (1) further has textile fibers and is preformed three dimensionally as tailored heating pad for furniture.

6. A panel heating module for heating and/or cooling of rooms, comprising:
at least one panel heating fabric (1) of at least one of the previous claims, wherein
said panel heating fabric (1) is molded with a thermally conductive material in a base plate.

7. A flexible panel heating module for heating and/or cooling of rooms, comprising:
at least one panel heating fabric (1) of at least one of the claims 1 to 6, wherein
said heating pipes (2), said at least one flow pipe (4), and said at least one return pipe (7) of the at least one panel heating fabric (1) are entirely filled with a fluid carrier medium and vented; and
said at least one flow pipe (4) and said at least one return pipe (7) of said at least one panel heating fabric (1) each have a hydraulic coupling (9) prepared for connecting to a central heating or cooling system (12, 13).

8. The panel heating module of claim 6 or 7, further comprising:
a circulator (8) for pumping a carrier medium from said central heating or cooling system (12, 13) through said panel heating module.

## Revendications

1. Tissu de chauffe de surface (1) destiné à chauffer et/ou refroidir des pièces, comprenant :
une pluralité de tubes de chauffe (2) flexibles pour un milieu porteur fluide qui est insérée par tissage dans un tissu de fibres tissulaires (3) thermiquement conductrices qui se trouvent en contact thermique avec les tubes de chauffe (2) ;
au moins une conduite montante (4) pour l'approvisionnement des tubes de chauffe (2) avec un milieu porteur ; et
au moins une conduite de retour (7) pour l'écoulement du milieu porteur,
**caractérisé en ce que**
une pluralité de fibres optiques (5) est insérée par tissage dans le tissu de chauffe de surface (1) ; et
le tissu de chauffe de surface (1) est coulé dans une masse de remplissage élastique avec une bonne conductivité thermique.

2. Tissu de chauffe de surface (1) selon la revendication 1, dans lequel le tissu de chauffe de surface (1) comprend en outre :
au moins une source de lumière (6) qui est couplée aux fibres optiques (5).

3. Tissu de chauffe de surface (1) selon la revendication 1 ou 2, dans lequel les fibres optiques (5) sont des fibres optiques polymères latérales.

4. Tissu de chauffe de surface (1) selon au moins l'une des revendications précédentes, dans lequel les fibres tissulaires (3) thermiquement conductrices sont des fils métalliques et/ou des fibres de carbone.

5. Tissu de chauffe de surface (1) selon au moins l'une des revendications précédentes, dans lequel le tissu de chauffe de surface (1) présente en outre des fibres textiles et est préformé de façon tridimensionnelle en tant que revêtement de chauffe adapté pour meuble.

6. Module de chauffe de surface destiné à chauffer et/ou refroidir des pièces, comprenant :
au moins un tissu de chauffe de surface (1) selon au moins l'une des revendications précédentes,
dans lequel le tissu de chauffe de surface (1) est coulé dans une plaque de base avec un matériau thermiquement conducteur.

7. Module de chauffe de surface flexible destiné à chauffer et/ou refroidir des pièces, comprenant :
au moins un tissu de chauffe de surface (1) selon au moins l'une des revendications 1 à 6, dans lequel :
les tubes de chauffe (2), la au moins une conduite montante (4) et la au moins une conduite de retour (7) du au moins un tissu de chauffe de surface (1) sont entièrement remplis et purgés avec un milieu porteur fluide ; et
la au moins une conduite montante (4) et la au moins une conduite de retour (7) du au moins un tissu de chauffe de surface (1) présentent respectivement un couplage (9) hydraulique prêt pour un raccordement à un système de chauffage ou de refroidissement (12, 13) central.

8. Module de chauffe de surface selon la revendication 6 ou 7, comprenant en outre :
une pompe de circulation (8) pour pomper un milieu porteur depuis le système de chauffage ou de refroidissement (12, 13) central à travers le module de chauffe de surface.
